# EUROPÄISCHE PATENTSCHRIFT

(11) **EP 2 595 720 B1**
(45) Veröffentlichungstag und Bekanntmachung des Hinweises auf die Patenterteilung: **20.04.2016**
(21) Anmeldenummer: 11741519.0
(22) Anmeldetag: 22.07.2011
(51) Int. Cl.: B01D 29/11, B01D 29/21, B01D 29/23

(54) **FILTERELEMENT ZUR FILTRATION VON FLUIDEN**
FILTER ELEMENT FOR FILTERING FLUIDS
ÉLÉMENT FILTRANT POUR LA FILTRATION DE FLUIDES

(30) Priorität: 22.07.2010 DE 102010031842
(43) Veröffentlichungstag der Anmeldung: 29.05.2013
(73) Patentinhaber: RT-Filtertechnik Gmbh, 88048 Friedrichshafen (DE)
(72) Erfinder: GROBE, Volker, 99425 Weimar-Tiefurt (DE); FRIES, Uwe, 07743 Jena (DE); OBERLI, Frank, CH-8193 Eglisau (CH)
(74) Vertreter: Bartels, Martin Erich Arthur
(86) Internationale Anmeldenummer: PCT/EP2011/003687
(87) Internationale Veröffentlichungsnummer: WO 2012/010325

(56) Entgegenhaltungen:
- US-A1- 2003 085 165

## Beschreibung

Die Erfindung betrifft ein Filterelement zur Filtration von Fluiden, mit einer flächigen Stützstruktur, die die Wand eines Stützrohres bildet, das die Außenseite eines Filtermediums umgibt und eine Durchströmfläche und eine Markierungsfläche bildet, wobei die Durchströmfläche ein Lochmuster bildende Durchströmöffnungen und die Markierungsfläche visuell erkennbare Markierungselemente aufweist.

Für den Betrieb von Filtereinrichtungen, wie sie beispielsweise in Hydrauliksystemen zur Filtration von Hydraulikflüssigkeiten oder in anderen Anlagen zur Filtration von Kraftstoffen, Schmierstoffen oder anderen Betriebsmitteln eingesetzt werden, ist ein gutes Betriebsverhalten der benutzten Filterelemente maßgeblich. Wesentliche Gesichtspunkte sind hierbei eine druckfeste Abstützung der Filtermedien gegen angreifende Strömungskräfte, was hohe mechanische Festigkeit der betreffenden Stützstrukturen bedingt, und dass durch die Stützstruktur ein Mindestmaß an Strömungswiderstand erzeugt werden soll. Um diesen Forderungen gerecht zu werden, ist es Stand der Technik, Durchströmöffnungen in Form eines Lochmusters in der Wand der Stützstruktur vorzusehen, wodurch sich ein annehmbarer Kompromiss aus Strukturfestigkeit und Fluiddurchlässigkeit erreichen lässt.

Die US 2003/0085165 A1 beschreibt ein Filterelement und ein Verfahren zum Zusammenbau eines Filterelementes mit einem plissierten Filtermedium mit einer kontinuierlichen Reihe von sich axial erstreckenden, miteinander verbundenen Falten, die einen mittigen Hohlraum umschreiben und von der Mittelachse radial nach außen ragen. Es ist eine Stützhülse vorgesehen, die ein Innenmaß hat, welches normalerweise kleiner ist als das äußere Originalmaß des Filtermediums. Um das Filtermedium in die Stützhülse zu bringen, ist vorgesehen, dass das Filtermedium zusammengepresst wird und in die Stützhülse eingeführt wird und anschließend wieder entspannt wird. Auf dem Filtermedium sind Identifikationsvermerke angeordnet.

Bei derartigen Filterelementen besteht häufig das Bedürfnis, an der Außenseite visuell erkennbare Markierungen anzubringen. Hierzu ist es üblich, innerhalb der Fläche der Stützstruktur eine gegenüber der Durchströmfläche abgegrenzte Markierungsfläche vorzusehen, in der Markierungselemente in Form visuell lesbarer Zeichen aufgedruckt sind, beispielsweise Herstellerbezeichnungen oder Spezifikationsdaten. In nachteiliger Weise führt die durch die Markierungsfläche bewirkte Unterbrechung der Durchströmfläche zu einer entsprechenden Verringerung der gesamten Strömungsfläche, die durch die Addition der Lochquerschnitte des Lochmusters bestimmt ist, so dass bei Anbringen von Markierungen ein Anstieg des Strömungswiderstandes in Kauf genommen werden muss.

Im Hinblick auf diese Problematik stellt sich die Erfindung die Aufgabe, ein Filterelement zur Verfügung zu stellen, bei dem die Anbringung von Markierungen mit einem vergleichsweise geringeren Verlust an effektiver Strömungsfläche einhergeht.

Erfindungsgemäß ist diese Aufgabe durch ein Filterelement gelöst, das die Merkmale des Patentanspruches 1 in seiner Gesamtheit aufweist.

Gemäß dem kennzeichnenden Teil des Anspruches 1 besteht eine wesentliche Besonderheit der Erfindung darin, dass die Markierungselemente in der Markierungsfläche durch ein sich vom Lochmuster der Durchströmfläche visuell erkennbar abhebendes zweites Lochmuster gebildet sind. Dadurch bildet die Markierungsfläche keine durchgehende Sperrfläche, sondern, da die Markierungselemente durch eine ein zweites Lochmuster bildende Lochung gebildet sind, zusätzliche Durchströmöffnungen, d. h. die Markierung selbst bildet mit dem Lochmuster der Markierungselemente eine Zusatz-Durchströmfläche innerhalb der Markierungsfläche. Insbesondere bei Markierungen mit Markierungselementen in Form von Großbuchstaben lässt sich dadurch ein Großteil der Markierungsfläche als zusätzliche Durchströmfläche gestalten, wobei gleichzeitig eine gute visuelle Erkennbarkeit gewährleistet ist, selbst wenn ein Großteil der Markierungsfläche mit dem zweiten Lochmuster ausgefüllt ist.

Bei Ausführungsbeispielen, bei denen sich das zweite Lochmuster vom in der Durchströmfläche befindlichen ersten Lochmuster durch eine davon abweichende Lochgröße, vorzugsweise kleinere Lochgröße, unterscheidet, hebt sich die Markierung visuell besonders gut erkennbar vom ersten Lochmuster ab.

Hierbei kann die Anordnung so getroffen sein, dass zumindest ein Lochmuster, vorzugsweise das erste Lochmuster, rechteckförmige Löcher aufweist. Derartige Lochmuster zeichnen sich durch einen guten Kompromiss zwischen mechanischer Festigkeit und geringem Strömungswiderstand aus.

Die Anordnung kann auch so getroffen sein, dass zumindest ein Lochmuster runde Löcher aufweist. Wenn hierbei das zweite Lochmuster der Markierungselemente mit runden Löchern gebildet ist und das erste Lochmuster rechteckförmige Löcher aufweist, heben sich die Markierungselemente besonders augenfällig vom umgebenden ersten Lochmuster ab.

Die Stützstruktur kann ein im Wesentlichen die gesamte Außenseite eines zylindrischen Filtermaterials umgebendes, einstückiges Stützrohr ausbilden.

Insbesondere bei in Großanlagen eingesetzten Filtereinrichtungen, bei denen Filterelemente großer Abmessungen benutzt werden und die zugehörigen äußeren Stützrohre der Filterelemente verhältnismäßig großflächige Bauteile sind, kann die Anordnung mit Vorteil so getroffen sein, dass ein die Außenseite eines zylindrischen Filtermaterials umgebendes Stützrohr aus einem Wickel aus mehreren bandförmigen Stützstrukturteilen gebildet ist, von denen zumindest ein Stützstrukturteil mit einem Markierungselemente bildenden zweiten Lochmuster versehen ist.

Nachstehend ist die Erfindung anhand der Zeichnung im Einzelnen erläutert. Es zeigen:
- Fig. 1: eine stark vereinfacht gezeichnete perspektivische Ansicht einer flächigen Stützstruktur in Form eines äußeren Stützrohres für ein im übrigen nicht dargestelltes Filterelement;
- Fig. 2: einen gegenüber Fig. 1 in größerem Maßstab und in gestrecktem, ebenem Zustand gezeichneten Flächenausschnitt der Stützstruktur eines Filterelementes gemäß dem Stand der Technik;
- Fig. 3: ebenfalls in ebenem, gestrecktem Zustand die Draufsicht der Stützstruktur für ein Ausführungsbeispiel des erfindungsgemäßen Filterelementes;
- Fig. 4: eine der Fig. 3 ähnliche Draufsicht eines Abschnittes eines bandförmigen Strukturelementteiles für die Bildung eines gewickelten Stützrohres für ein abgewandeltes Ausführungsbeispiel des erfindungsgemäßen Filterelementes;
- Fig. 5: eine stark schematisch vereinfacht gezeichnete perspektivische Darstellung des mit dem Stützstrukturteil von Fig. 4 gewickelten Stützrohres;
- Fig. 6: einen stark vergrößert gezeichneten Ausschnitt des in Fig. 5 mit VI bezeichneten Bezirks des Stützrohres und
- Fig. 7: einen gegenüber Fig. 6 vergrößert gezeichneten Teilschnitt entsprechend der Linie VII-VII von Fig. 6.

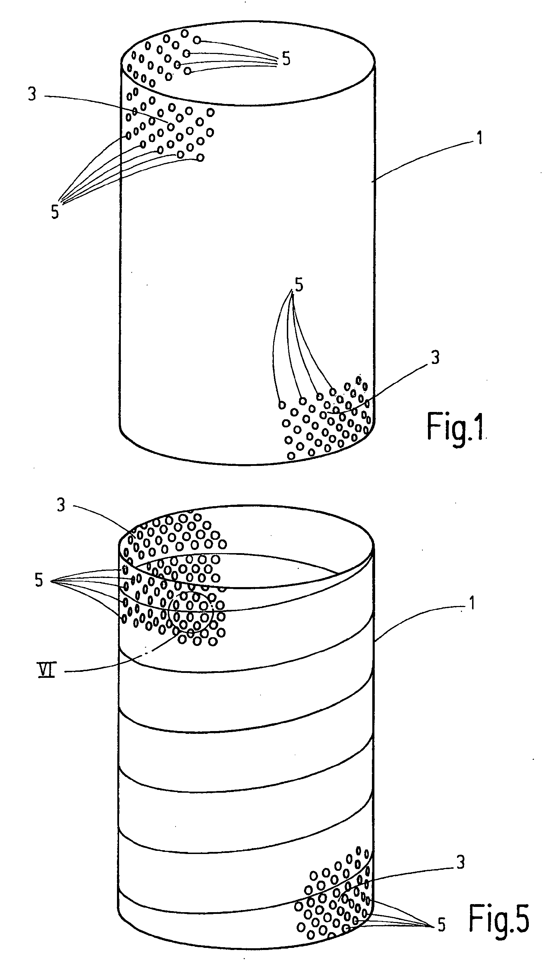

Die Fig. 1 zeigt in stark vereinfacht gezeichneter Darstellung eine Stützstruktur in Form eines äußeren Stützrohres 1 für ein Filterelement. Das Stützrohr 1 umgibt die Außenseite eines nicht dargestellten Filtermediums, das in üblicher Art aufgebaut sein kann, beispielsweise in Form einer mehrlagigen Filtermattenbahn, die plisseeartig gefaltet und in die Form eines zylindrischen Hohlkörpers gebracht sein kann. Die Wand des Stützrohres 1 bildet eine Durchströmfläche 7, in der für den Fluiddurchtritt Durchströmöffnungen ein Lochmuster 3 bilden, dessen Löcher 5 in Fig. 1 nur teilweise eingezeichnet und beziffert sind.

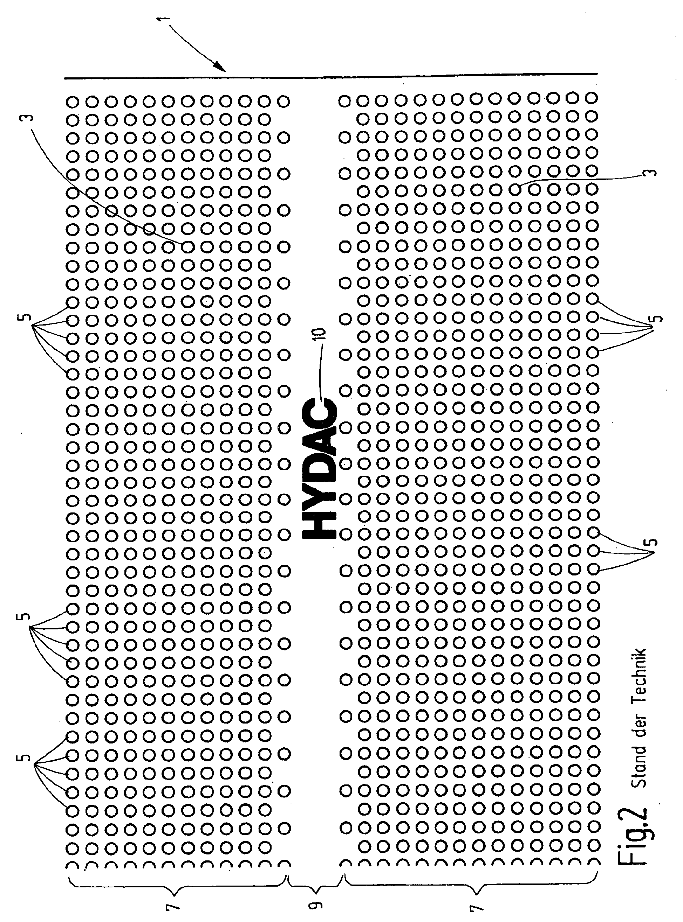

Die Fig. 2 zeigt einen Flächenabschnitt (in eben gestreckter Form) für ein Stützrohr 1 eines Filterelementes gemäß dem Stand der Technik, wobei sich, um am Stützrohr 1 eine visuell erkennbare Markierung anzubringen, im vorliegenden Fall in Form eines Schriftzuges 10, in der Wand des Stützrohres 1 außer der Durchströmfläche 7 eine Markierungsfläche 9 befindet, die, für das Aufdrucken einer Markierung, frei von Löchern 5 ist. Das Vorhandensein der Markierungsfläche 9 führt zu einer Reduzierung der freien Gesamtlochfläche mit entsprechendem Anstieg der Strömungsverluste beim Betrieb des betreffenden Filterelementes.

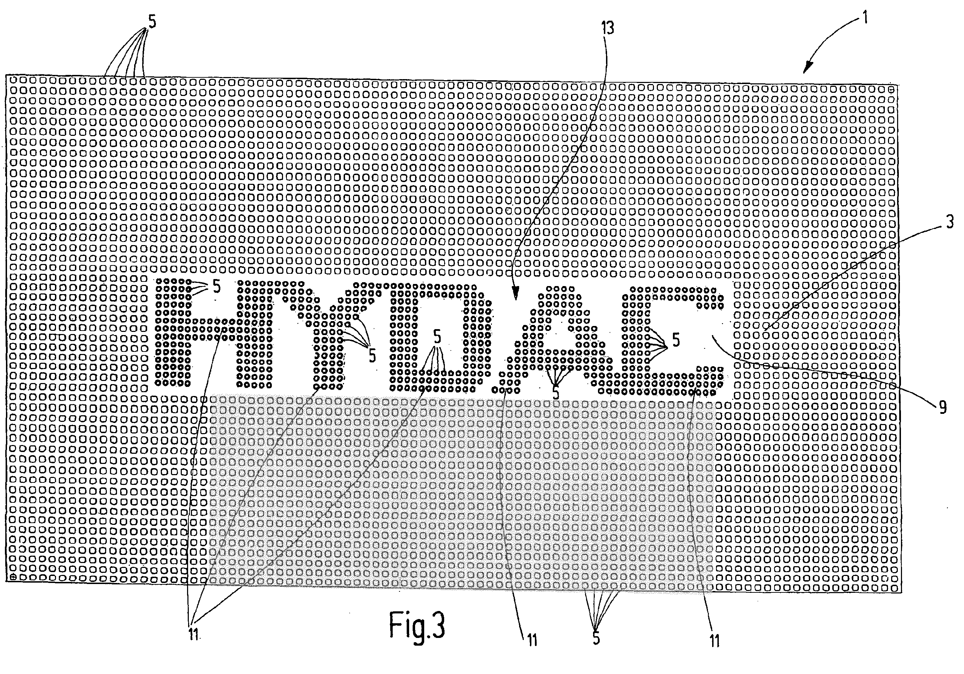

Fig. 3 zeigt demgegenüber ein Stützrohr 1 (in gestreckter, nicht zum Zylinder gerollter Form) für ein Filterelement gemäß einem Ausführungsbeispiel der Erfindung. In der sich innerhalb der Durchströmfläche 7 befindenden Markierungsfläche 9 befindet sich eine Markierung mit Markierungselementen 11 in Form von Großbuchstaben. Die Markierungselemente 11 sind durch ein zweites Lochmuster 13 gebildet, das sich vom in der Durchströmfläche 7 befindlichen ersten Lochmuster 3 visuell erkennbar abhebt. Beim in Fig. 3 gezeigten Beispiel ist das erste Lochmuster 3 durch Löcher 5 rechteckiger Form gebildet, die in fluchtender Zeilen- und Spaltenanordnung durch Stanzen ausgebildet sind. Das zweite Lochmuster 13 ist aus Löchern 5 gebildet, die für gute visuelle Unterscheidbarkeit gegenüber den Löchern 5 des ersten Lochmusters 3 eine geringere Lochgröße und eine runde Lochform besitzen. Es versteht sich, dass eine leichte visuelle Unterscheidbarkeit auch erreichbar wäre, wenn andere Lochformen oder -größen bei erstem Lochmuster 3 und/oder zweitem Lochmuster 13 vorgesehen wären. Beim in Fig. 3 gezeigten Beispiel sind die in der Durchströmfläche 7 das erste Lochmuster 3 befindlichen Löcher 5 rechteckförmig. Im Vergleich zu einem Lochmuster mit runden Löchern ergibt sich hierbei ein verringerter Strömungswiderstand bei gleicher Strukturfestigkeit. Dadurch, dass die Markierungselemente 11 durch das zweite Lochmuster 13 gebildet sind, steht in der Markierungsfläche 9 eine Zusatz-Durchströmfläche zur Verfügung, so dass durch das Aufbringen einer Markierung ein vergleichsweise geringerer Verlust an effektiver Gesamt-Durchströmfläche in Kauf genommen werden muss.

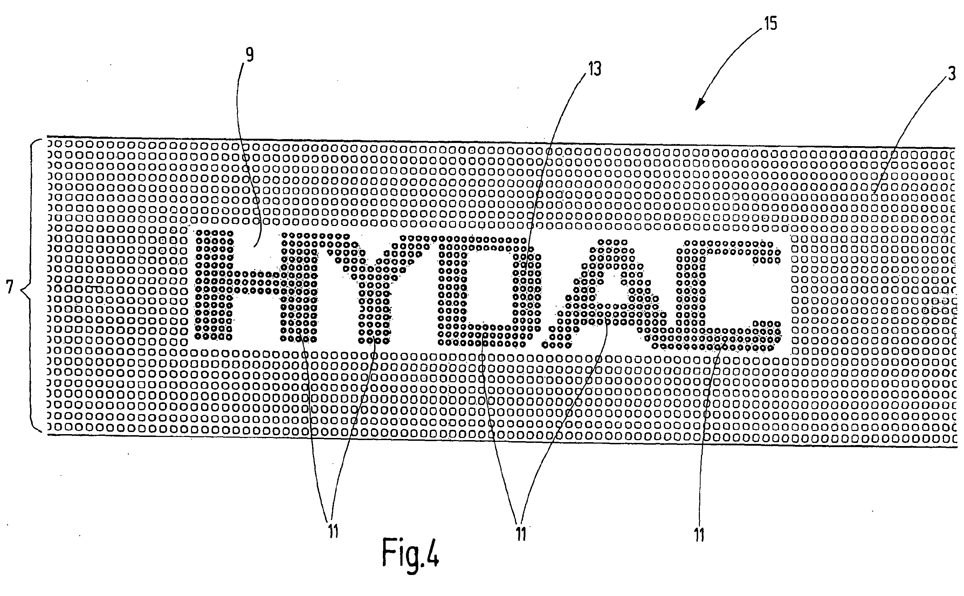

Die Fig. 3 zeigt ein Stützrohr 1, das als Stützstruktur die gesamte Außenseite des betreffenden Filtermaterials einstückig umgibt. Wenn es sich um Filterelemente besonders großer Abmessungen handelt, kann das Stützrohr 1 aus einem Wickel aus einem oder mehreren bandförmigen Strukturteilen 15 gebildet sein, von denen in Fig. 4 ein Längenabschnitt dargestellt ist. Dieser Längenabschnitt ist wiederum, wie auch in Fig. 3 gezeigt, innerhalb der Durchströmfläche 7 mit einer Markierungsfläche 9 versehen, innerhalb deren durch ein zweites Lochmuster 13, das sich vom ersten Lochmuster 3 in der Durchströmfläche 7 visuell unterscheidet, die entsprechenden Markierungselemente 11 gebildet sind. Eine entsprechende Markierungsfläche 9 könnte auch in einem oder mehreren Längenabschnitten des bandförmigen Strukturteiles 15 vorgesehen sein.

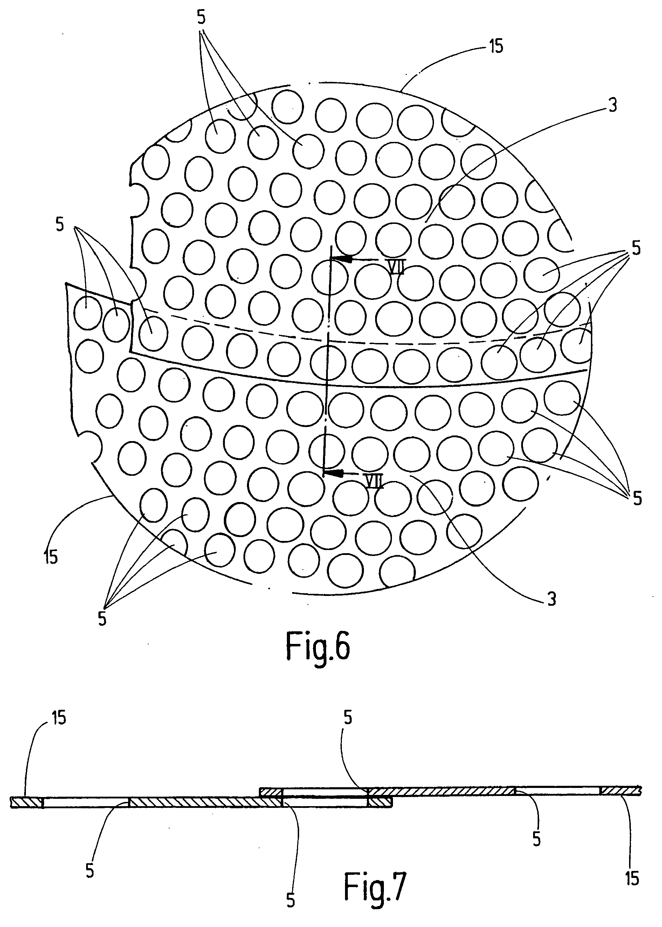

Die Fig. 5 bis 7 verdeutlichen die Bildung eines in Wickelbauweise gefertigten Stützrohres 1, wobei in Fig. 5, wie auch in Fig. 1, lediglich einige Löcher 5 des ersten Lochmusters 3 angedeutet und beziffert sind. Die Fig. 6 zeigt in vergrößertem Ausschnitt nähere Einzelheiten des in Fig. 5 mit VI bezeichneten Bezirks. Wie aus Fig. 6 ersichtlich ist, sind bei der Bildung des Bandwickels die Ränder der aneinander angrenzenden Strukturteile 15 mit Randüberlappung so aneinander gelegt, dass sich die Löcher 5 der äußersten Lochreihe beider angrenzender Strukturteile 15 überlappen und dadurch aufgrund der Überlappung kein Verlust an effektiver Durchströmfläche gegeben ist, siehe hierzu auch die vergrößerte Schnittdarstellung von Fig. 7.

Die Verbindung am Überlappungsbereich der Ränder kann z.B. durch Kleben oder Schweißen erfolgen. Als Werkstoff für die durch das Stützrohr 1 gebildete Stützstruktur kann Metallblech, das für das Lochstanzen geeignet und gegenüber den zu filtrierenden Medien korrosionsbeständig ist, benutzt werden. Dabei kann es sich um ein feuerlaminiertes Blech (Zincor^{®}) handeln, das verzinnt werden kann, wobei die Stossstellen benachbarter Strukturteile 15 verlötet werden können.

Die Ausbildung der Lochmuster 3, 13 kann auf verschiedene Art und Weise erfolgen, beispielsweise durch Lasern, Ätzen oder bei für das Lochstanzen geeigneten Werkstoffen in vorteilhafter Weise durch Stanzen. Dabei kann so vorgegangen werden, dass die mit der Lochung zu versehende Materialbahn in einer Vorschubbewegung unter einer Stanzeinrichtung hindurchgeführt wird, die eine den zu bildenden Lochzeilen entsprechende Anzahl Stanzstempel aufweist. Hierbei sind zumindest Gruppen von Lochstempeln unabhängig von anderen Lochstempeln oder Gruppen von Lochstempeln steuerbar, um das vom ersten Lochmuster 3 abgesetzte zweite Lochmuster 13 zu bilden, wobei die Lochstempel der das zweite Lochmuster 13 bildenden Gruppe wiederum untereinander unabhängig steuerbar sind, um die Markierungselemente 11, etwa in Form von Buchstaben, als Musterform darzustellen. Es versteht sich, dass die Lochstempel der einzelnen Gruppen die betreffenden unterschiedlichen Lochformen und/oder -größen stanzen können.

## Patentansprüche

1. Filterelement zur Filtration von Fluiden, mit einer flächigen Stützstruktur, die die Wand eines Stützrohres (1) bildet, das die Außenseite eines Filtermediums umgibt und eine Durchströmfläche (7) und eine Markierungsfläche (9) bildet, wobei die Durchströmfläche (7) ein Lochmuster (3) bildende Durchströmöffnungen (5) und die Markierungsfläche (9) visuell erkennbare Markierungselemente (11) aufweist, **dadurch gekennzeichnet, dass** die Markierungselemente (11) in der Markierungsfläche (9) durch ein sich vom Lochmuster (3) der Durchströmfläche (7) visuell erkennbar abhebendes zweites Lochmuster (13) gebildet sind.

2. Filterelement nach Anspruch 1, **dadurch gekennzeichnet, dass** sich das zweite Lochmuster (13) vom in der Durchströmfläche (7) befindlichen ersten Lochmuster (3) durch eine davon abweichende Lochgröße, vorzugsweise kleinere Lochgröße, unterscheidet.

3. Filterelement nach Anspruch 1 oder 2, **dadurch gekennzeichnet, dass** sich das zweite Lochmuster (13) vom in der Durchströmfläche (7) befindlichen ersten Lochmuster (3) durch eine davon abweichende Lochform unterscheidet.

4. Filterelement nach einem der vorstehenden Ansprüche, **dadurch gekennzeichnet, dass** zumindest ein Lochmuster (3, 13), vorzugsweise das erste Lochmuster (3), rechteckförmige Löcher (5) aufweist.

5. Filterelement nach einem der vorstehenden Ansprüche, **dadurch gekennzeichnet, dass** zumindest ein Lochmuster (3, 13) runde Löcher (5) aufweist.

6. Filterelement nach einem der vorstehenden Ansprüche, **dadurch gekennzeichnet, dass** die Löcher (5) zumindest eines Lochmusters (3, 13) in miteinander fluchtenden Zeilen und Spalten angeordnet sind.

7. Filterelement nach einem der vorstehenden Ansprüche, **dadurch gekennzeichnet, dass** durch das zweite Lochmuster (13) gebildete Markierungselemente (11) alphanumerische Zeichen, insbesondere Buchstaben oder Ziffern, bilden.

8. Filterelement nach einem der vorstehenden Ansprüche, **dadurch gekennzeichnet, dass** die Stützstruktur ein im wesentlichen die gesamte Außenseite eines zylindrischen Filtermaterial umgebendes, einstückiges Stützrohr (1) ist.

9. Filterelement nach einem der vorstehenden Ansprüche, **dadurch gekennzeichnet, dass** ein die Außenseite eines zylindrischen Filtermaterials umgebendes Stützrohr (1) aus einem Wickel aus einem oder mehreren bandförmigen Strukturteilen (15) gebildet ist, von denen zumindest ein Strukturteil (15) mit einem Markierungselemente (11) bildenden zweiten Lochmuster (13) versehen ist.

## Claims

1. A filter element for filtering fluids, comprising a flat support structure which forms the wall of a support tube (1) which surrounds the exterior of a filter medium and forms a through-flow surface (7) and a marking surface (9), the through-flow surface (7) having through-flow apertures (5) that form a perforation pattern (3) and the marking surface (9) having visually discernible marking elements (11), **characterised in that** the marking elements (11) are formed in the marking surface (9) by a second perforation pattern (13) which contrasts with the perforation pattern (3) of the through-flow surface (7) in a visually discernible manner.

2. The filter element according to Claim 1, **characterised in that** the second perforation pattern (13) differs from the first perforation pattern (3), which may be found in the through-flow surface (7), due to a deviating perforation size, preferably a smaller perforation size.

3. The filter element according to Claim 1 or 2, **characterised in that** the second perforation pattern (13) differs from the first perforation pattern (3), which may be found in the through-flow surface (7), due to a deviating perforation shape.

4. The filter element according to any of the preceding claims, **characterised in that** at least one perforation pattern (3, 13), preferably the first perforation pattern (3), exhibits rectangular perforations (5).

5. The filter element according to any of the preceding claims, **characterised in that** at least one perforation pattern (3, 13) exhibits round perforations (5).

6. The filter element according to any of the preceding claims, **characterised in that** the perforations (5) of at least one perforation pattern (3, 13) are arranged in lines and columns that are in alignment with each other.

7. The filter element according to any of the preceding claims, **characterised in that** marking elements (11) formed by the second perforation pattern (13) form alphanumerical characters, in particular letters or numbers.

8. The filter element according to any of the preceding claims, **characterised in that** the support structure is a one-piece support tube (1) that substantially surrounds the entire exterior of a cylindrical filter material.

9. The filter element according to any of the preceding claims, **characterised in that** a support tube (1) surrounding the exterior of a cylindrical filter material is formed from a winding consisting of one or a plurality of strip-shaped structure parts (15), of which at least one structure part (15) is provided with a second perforation pattern (13) that forms marking elements (11).

## Revendications

1. Elément filtrant pour la filtration de fluides, comprenant une structure d'appui à deux dimensions, qui forme la paroi d'un tube (1) d'appui, lequel entoure le côté extérieur d'un milieu filtrant et forme une surface (7) de passage et une surface (9) de repérage, la surface (7) de passage ayant des ouvertures (5) de passage formant un modèle (3) de trous et la surface (9) de repérage des éléments (11) de repérage reconnaissables visuellement, **caractérisé en ce que** les éléments (11) de repérage sont formés dans la surface (9) de repérage par un deuxième modèle (13) de trous se détachant visuellement du modèle (3) de trous de la surface (7) de passage.

2. Elément filtrant suivant la revendication 1, **caractérisé en ce que** le deuxième modèle (13) de trous se distingue du premier modèle (3) de trous se trouvant dans la surface (7) de passage par une dimension de trou qui s'en écarte, de préférence par une dimension de trou plus petite.

3. Elément filtrant suivant la revendication 1 ou 2, **caractérisé en ce que** le deuxième modèle (13) de trous se distingue du premier modèle (3) de trous se trouvant dans la surface (7) de passage par une forme de trou qui s'en écarte.

4. Elément filtrant suivant l'une des revendications précédentes, **caractérisé en ce qu'**au moins un modèle (3, 13) de trous, de préférence le premier modèle (3) de trous, a des trous (5) rectangulaires.

5. Elément filtrant suivant l'une des revendications précédentes, **caractérisé en ce qu'**au moins modèle (3, 13) de trous a des trous (5) circulaires.

6. Elément filtrant suivant l'une des revendications précédentes, **caractérisé en ce que** les trous (5) d'au moins un modèle (3, 13) de trous sont disposés en lignes et en colonnes en alignement les unes avec les autres.

7. Elément filtrant suivant l'une des revendications précédentes, **caractérisé en ce que** des éléments (11) de repérage formés par le deuxième modèle (13) de trous forment des caractères alphanumériques, notamment des lettres ou des chiffres.

8. Elément filtrant suivant l'une des revendications précédentes, **caractérisé en ce que** la structure d'appui est un tube (1) d'appui d'un seul tenant, entourant sensiblement tout le côté extérieur d'une matière filtrante cylindrique.

9. Elément filtrant suivant l'une des revendications précédentes, **caractérisé en ce qu'**un tube (1) d'appui, entourant le côté extérieur d'une matière filtrante cylindrique, est formé d'un enroulement composé d'une ou de plusieurs parties (15) de structure en forme de bandes, parmi lesquelles au moins une partie (15) de structure est munie d'un deuxième modèle (13) de trous formant des éléments (11) de repérage.
